# FASCICULE DE BREVET EUROPEEN

(11) **EP 0 941 525 B1**
(45) Date de publication et mention de la délivrance du brevet: **06.04.2005**
(21) Numéro de dépôt: 98946544.8
(22) Date de dépôt: 01.10.1998
(51) Int. Cl.: G07F 7/10

(54) **SYSTEME D'AUTHENTIFICATION A CARTE A MICROCIRCUIT**
AUTHENTIFIZIERUNGSSYSTEM MIT CHIPKARTE
AUTHENTICATING SYSTEM WITH MICROCIRCUIT CARD

(30) Priorité: 02.10.1997 US 942904
(43) Date de publication de la demande: 15.09.1999
(73) Titulaire: ACTIVCARD, 92150 Suresnes Cédex (FR)
(72) Inventeur: AUDEBERT, Yves, Los Gatos, CA 95032 (US)
(74) Mandataire: Colas, Jean-Pierre
(86) Numéro de dépôt international: PCT/FR1998/002104
(87) Numéro de publication internationale: WO 1999/018546

(56) Documents cités:
- WO-A-97/36264
- DE-A- 4 223 258
- US-A- 4 974 193

## Description

La présente invention est relative à un système électronique d'authentification d'individus et/ou de messages, en particulier pour contrôler l'accès d'un utilisateur à une fonction, permettant à un utilisateur d'obtenir conditionnellement un service ou une autre prestation devant être fourni par une unité de service spécialisé associée au système en question.

Plus particulièrement, l'invention concerne un système de contrôle d'accès à ou d'authentification de messages dans un ordinateur ou, plus généralement, un réseau informatique, dont l'utilisation est réservée à des personnes s'étant dûment légitimées. De tels réseaux peuvent servir par exemple à assurer toutes sortes de services impliquant une transaction, le plus souvent à contrepartie économique, telle que le télé-achat, la télévision à péage, la banque à domicile, les jeux télévisés interactifs, ou également le facsimile confidentiel, etc.

Le brevet U.S. 4,720,860 décrit un système d'authentification dans lequel, pour engendrer des mots de passe, on utilise une variable statique et une variable dynamique. Dans ce brevet, au début d'une procédure de demande d'accès, l'utilisateur doit entrer un code fixe dans une unité d'authentification ("token") chaque fois qu'une transaction doit être réalisée. Le code fixe est une variable statique. Une seconde variable est également engendrée dans l'unité d'authentification, et celle-ci varie de façon dynamique en fonction du temps, en particulier en fonction de l'instant auquel le code fixe est introduit dans l'unité d'authentification par l'utilisateur. Les deux variables, dont l'une est statique et l'autre dynamique, sont alors utilisées comme paramètres d'entrée d'un algorithme secret de chiffrement servant à engendrer un mot de passe dans l'unité d'authentification. Ce mot de passe est affiché sur l'unité d'authentification et l'utilisateur est invité à le transférer dans un serveur de vérification. Le code fixe est également transféré au serveur qui, en utilisant le même algorithme de chiffrement et une variable dynamique ayant en principe la même valeur que celle utilisée dans l'unité d'authentification, calcule également le mot de passe. Ce dernier est comparé au mot de passe transmis au serveur par l'utilisateur et, s'il y a concordance, une autorisation d'accès à la fonction peut être délivrée. Ce système de contrôle d'accès emploie donc une variable statique à l'aide de laquelle l'algorithme de chiffrement calcule le mot de passe tout en utilisant également la variable dynamique.

Des systèmes d'authentification utilisant une variable dynamique fonction du temps pour engendrer des mots de passe sont également décrits dans les brevets U.S. 3,806,874, 4,601,011, 4,800,590.

Le Brevet US 4 974 193 décrit un circuit pour protéger l'accès à un système du traitement de l'information qui fournit un moyen de génération de nombres arbitraires.

Cette variable dynamique fonction du temps produite indépendamment dans l'unité d'authentification et dans le serveur, et les horloges de ces deux dispositifs utilisés pour engendrer la variable dynamique de part et d'autre, doivent être synchronisés avec une précision donnée.

La présente invention a pour but de fournir un système d'authentification offrant une meilleure sécurité contre les fraudes. Un autre but de l'invention est de fournir un système d'authentification fournissant des mots de passe dynamiques, en particulier des mots de passe dynamiques fonctions du temps, tout en utilisant au moins partiellement. des moyens matériels conventionnels.

A cet effet, la présente invention a pour objet un système d'authentification pour contrôler l'accès d'au moins un utilisateur à une fonction, ledit système comprenant au moins une première unité personnalisée pour ledit utilisateur et au moins une seconde unité de vérification commandant l'accès à ladite fonction,
- ladite première unité comprenant :
   - des premiers moyens générateurs pour engendrer au moins une variable dynamique ;
   - des premiers moyens de calcul pour engendrer un premier mot de passe à l'aide d'au moins un premier algorithme de chiffrement utilisant des paramètres d'entrée fonction de ladite variable dynamique ; et
   - des moyens pour transmettre ledit premier mot de passe à ladite seconde unité ;
- ladite seconde unité comprenant :
   - des seconds moyens générateurs pour, en réponse à une demande d'accès faite à l'aide d'une déterminée desdites premières unités, engendrer au moins une variable dynamique assignée à cette première unité déterminée;
   - des seconds moyens de calcul pour engendrer un second mot de passe à l'aide d'au moins un second algorithme de chiffrement utilisant des paramètres d'entrée fonction de ladite variable dynamique engendrée dans ladite seconde unité ;
   - des moyens pour comparer lesdits premier et second mots de passe ; et
   - des moyens pour, s'il y a une cohérence prédéterminée entre lesdits mots de passe, délivrer une autorisation d'accès à ladite fonction ;
- lesdits premier et second moyens générateurs prévus respectivement dans lesdites première et seconde unités engendrant ladite première variable dynamique de ladite première unité et ladite variable dynamique de ladite seconde unité de concert, mais de façon indépendante ;
- caractérisé en ce que
   - ladite première unité comprend une carte à microcircuit comprenant les premiers moyens de calcul et un lecteur de carte et,
   - lesdits moyens pour produire ladite variable dynamique de ladite première unité sont disposés à l'extérieur de ladite carte et ladite variable dynamique pour ladite première unité est transmise par ledit lecteur de carte auxdits premiers moyens de calcul dans ladite carte.

De préférence, ladite variable dynamique de chacune desdites première et seconde unités varie en fonction du temps.

Le système suivant l'invention combine les avantages de cartes telles que des cartes à microcircuits qui offrent un degré très élevé de sécurité en ce qui concerne le chiffrement de données mais ne possèdent pas de source d'énergie électrique propre, avec ceux de systèmes d'authentification fournissant des mots de passe dynamiques fonctions du temps.

D'autres caractéristiques et avantages de l'invention énumérés dans les sous-revendications ressortiront de la description qui va suivre donnée uniquement à titre d'exemple et faite en se référant aux dessins annexés sur lesquels :
La figure 1 est un schéma général d'un système d'authentification selon un premier mode de réalisation de l'invention ;
La figure 2 est un organigramme illustrant le principe de déroulement des opérations dans le système suivant l'invention, lorsqu'une demande d'accès est traitée ;
La figure 3 est un organigramme du mode de calcul d'une clé de chiffrement utilisée dans le calcul du mot de passe ;
La figure 4 montre une variante de réalisation des opérations représentées à la figure 2 ;
La figure 5 est un organigramme illustrant les opérations de calcul de mot de passe au moyen d'une version simplifiée du premier mode de réalisation représenté à la figure 1 ; et
La figure 6 est un schéma-bloc illustrant un second mode de réalisation de l'invention.

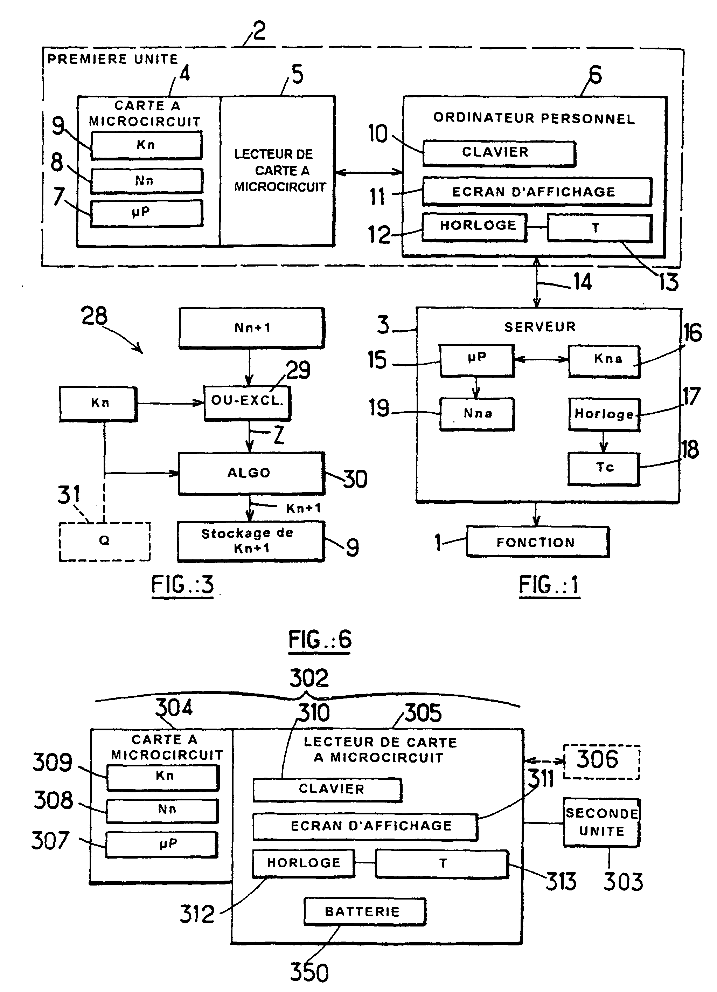

Sur la figure 1, on a représenté un schéma très simplifié d'un système d'authentification selon un premier mode de réalisation de l'invention.

Le système est supposé donner un accès conditionnel à une fonction qui est symbolisée par le rectangle 1 sur la figure 1. Le terme "fonction" doit être pris dans une acception très large. Il désigne toute fonction à laquelle l'accès est conditionné par une autorisation faisant intervenir une authentification impliquant une vérification du terminal à l'aide duquel la demande est formulée, et de préférence également une identification de la personne demandant l'accès à la fonction pour savoir si sa demande est légitime.

La fonction peut être de toute nature, par exemple une fonction d'accès à un local, à un réseau informatique ou à un ordinateur, à une transaction d'ordre pécuniaire (télé-achat, banque à domicile, jeu télévisé interactif, télévision à péage), etc. La fonction peut impliquer également l'authentification de messages.

On voit sur le premier mode de réalisation représenté à la figure 1 que le système suivant l'invention comprend au moins une première unité d'authentification 2 et au moins une seconde unité de vérification 3. On notera que le système d'authentification suivant l'invention peut comporter un grand nombre de premières unités et une ou plusieurs secondes unités, mais en tout cas en un nombre de secondes unités nettement plus faible que celui des premières unités. Les nombres d'unités 2 et 3 ne sont donc nullement limitatifs de l'invention.

La première unité 2 comprend une carte à microcircuit 4, un lecteur 5 de carte à microcircuit et un calculateur 6 tel qu'un ordinateur personnel (PC) auquel le lecteur 5 de carte est connecté par une interface appropriée telle qu'un port RS-232 ou un port parallèle, un clavier ou une interface PCMIA.

La carte à microcircuit 4 comprend un microcontrôleur 7 convenablement programmé pour exécuter un algorithme cryptographique ALGO, ainsi que la mémoire ROM habituelle. Elle comporte également une mémoire programmable, telle qu'une EEPROM, représentée à la figure 1 par un registre 8 pour stocker le contenu Nn d'un compteur d'événements et par un registre 9 pour stocker une clé dynamique secrète Kn.

Le calculateur 6 comprend un clavier 10 destiné à permettre l'introduction de données, telles que par exemple le numéro d'identification personnel PIN de l'utilisateur de la carte à microcircuit 4. Il comprend également un écran d'affichage 11, et une horloge pour incrémenter un compteur 13 qui fournit une variable dynamique T représentant le temps. Le calculateur 6 comprend également le microprocesseur, les mémoires, les interfaces,..... habituels qui n'ont pas été représentés sur le dessin.

La seconde unité 3, dénommée ci-après le serveur, communique avec le calculateur ou ordinateur 6 par la liaison 14. Cette communication peut être assurée à courte distance ou longue distance par tout moyen approprié. Les données transmises sur cette liaison comprennent en particulier le mot de passe devant être vérifié dans le serveur 3 et éventuellement des données à authentifier et traiter par le serveur.

Le serveur 3 comprend en particulier un processeur 15 capable de libérer conditionnellement les fonctions 1, visées par les demandes d'accès formulées par les différentes premières unités 2, ces fonctions pouvant être assurées à l'intérieur du serveur 3 ou à l'extérieur, Il est à noter que le serveur 3 coopère généralement avec un grand nombre de premières unités 2. Le serveur 5 comprend également une mémoire 16 pour stocker une clé dynamique secrète Kna pour chaque carte à microcircuit 4, une horloge 17 pour incrémenter un compteur 18 qui fournit une variante dynamique T_{c} représentant le temps, et une mémoire 19 pour stocker le contenu Nna d'un compteur d'événements pour chaque carte à microcircuit 4.

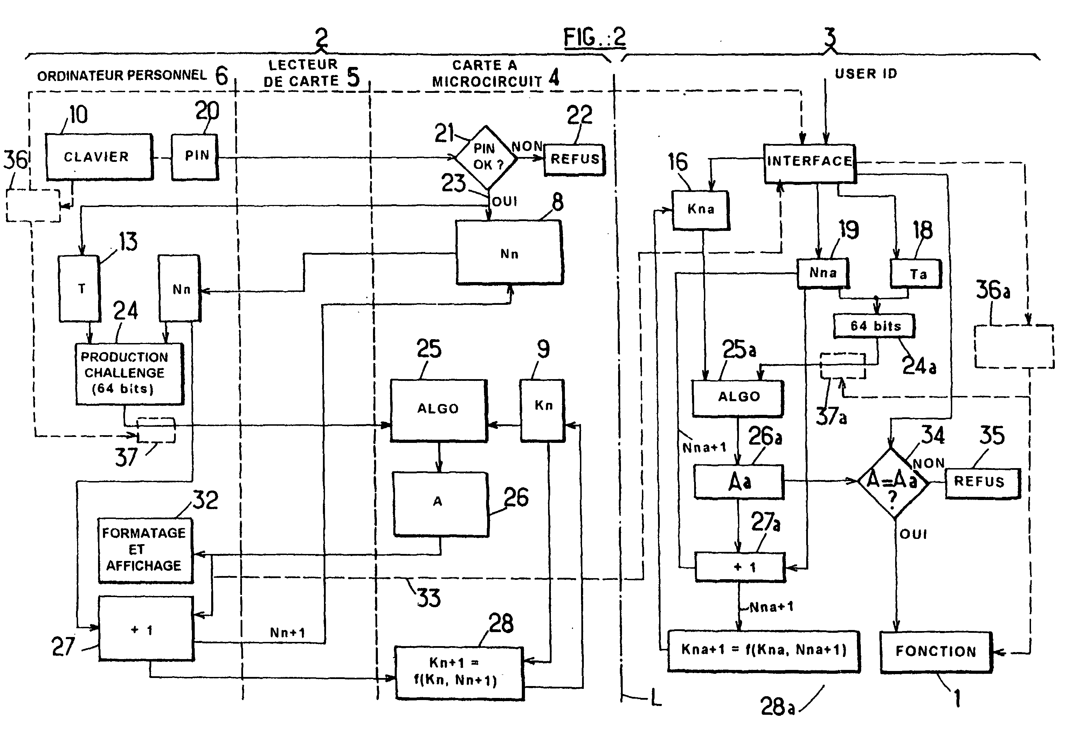

La figure 2 représente un organigramme simplifié des diverses opérations qui se déroulent lorsqu'une demande d'accès à une fonction est formulée par l'utilisateur d'une première unité 2. La figure 2 est divisée en deux parties, la partie à gauche du trait en pointillés L représentant les opérations exécutées dans la première unité 2 et la partie à droite de ce trait montrant celles qui se déroulent dans le serveur 3.

La carte 4 est personnalisée de manière à être attribuée personnellement à un utilisateur donné. Elle porte un numéro d'identification public ("USER ID") et/ou ce nombre peut être enregistré dans celle-ci sous forme non chiffrée et attribué à cette carte au moment de son initialisation. Il peut également être formé par le nom de l'utilisateur ou toute autre information qui lui est spécifique.

Pour initier la procédure dans le serveur 3, le numéro d'identification public (USER ID) doit être d'abord communiqué au serveur 15. Cette opération peut être assurée de différentes manières. Le numéro d'identification public (USER ID) peut être transmis au serveur 3 par le calculateur 6, par exemple directement aussitôt que la carte 4 est introduite dans le lecteur 5, ou après qu'il ait été introduit au clavier 10 du calculateur 6 par l'utilisateur lui-même.

L'utilisateur doit également donner sa légitimation en tapant, en 20, son code d'identification personnel ou code PIN au clavier 10 du calculateur 6. Le code introduit au clavier est vérifié en 21 dans la carte 4 par comparaison avec le code PIN stocké dans la mémoire de la carte 4. En cas de discordance, la demande d'accès est immédiatement refusée en 22 par la carte 4, l'utilisateur pouvant se voir allouer éventuellement plusieurs tentatives consécutives avant qu'un refus définitif lui soit opposé, si elles restent toutes infructueuses.

Si au contraire le code PIN introduit et le code PIN mémorisé concordent, le programme déclenche en 23 l'opération de calcul du mot de passe dans la carte 4.

Le calcul consiste en un chiffrement à l'aide d'un algorithme de chiffrement qui peut être secret ou public (bloc 25). Dans ce dernier cas, il peut s'agir d'un algorithme appelé DES (Data Encryption Standard) par les spécialistes de cette technique.

L'algorithme en question utilise des paramètres d'entrée fonction de variables dynamiques qui, dans le cas représenté, sont au nombre trois. Deux d'entre elles sont une variable Nn stockée dans le registre 8 de la carte 4 et qui représente le nombre de demandes d'accès effectué par la carte 4, et une variable T représentant le temps actuel et correspondant à la position du compteur 13 du calculateur 6. Lors de l'initialisation, ces variables peuvent être fixées à des valeurs initiales, NO et/ou TO respectivement, qui ne sont pas nécessairement égales à 0 et qui peuvent être secrètes ou non. De même, Nn et T peuvent varier selon des fonctions faisant intervenir des paramètres tels qu'entre autres le nombre de demandes d'accès, une fonction du nombre de demandes d'accès et le temps actuel respectivement.

Plus particulièrement, à la figure 2, une fois que l'utilisateur a été identifié par la première unité 2 au moyen de l'introduction du numéro d'identification personnel ou PIN par le clavier 10, le PC 6 lit le contenu Nn du compteur d'événements 8 dans la carte 4.

Chacune des variables Nn et T peut comporter 32 bits et être soumise préalablement à une opération de concaténation dans le calculateur 6, en 24, offrant ainsi un paramètre d'entrée ou "challenge" de 64 bits au total. L'opération effectuée en 24 peut, en variante, être constituée par tout traitement ou combinaison comme l'entrelaçage, le hachage, une opération OU-EXCLUSIF ou ET, etc. effectué sur Nn et T. En d'autres termes, l'opération en 24 n'est pas limitée à ces diverses variantes, mais elle peut consister en toute opération exécutée dans le but de produire une sortie (par exemple sur 64 bits) par combinaison ou traitement de Nn et T selon l'une de virtuellement un nombre infini de possibilités.

Ce challenge est appliqué par le calculateur 6 à la carte à microcircuit 4 et est chiffré par l'algorithme ALGO en 25 au moyen de la clé de chiffrement Kn stockée dans le registre 9 de la carte à microcircuit 4. Un autre moyen de définir l'algorithme mis en oeuvre en 25 consiste à dire que l'algorithme génère un mot de passe en fonction des valeurs actuelles de Nn, T et Kn ou que Kn est chiffré en fonction d'une clé comprenant une valeur engendrée par concaténation de Nn et T en 24.

Le chiffrement effectué en 25 dans la carte 4 génère un mot de passe A en 26 et provoque l'incrémentation d'une unité par le calculateur 6, en 27, de la position du registre 8 de demande d'accès de la carte 4 qui stocke Nn. Le nombre incrémenté Nn+1 est stocké dans le registre 8 et soumis à une opération de calcul en 28 dans la carte 4 pour calculer la nouvelle valeur Kn+1 de la troisième variable dynamique ou clé de chiffrement secrète. En variante, la sortie du bloc 27 pourrait commander l'incrémentation du registre 8 d'un autre nombre que le nombre 1, c'est-à-dire que l'incrémentation pourrait être de deux unités (ou tout autre nombre) à chaque fois. De même, le nombre d'unités l'incrémentation peut varier d'une demande d'accès à la suivante. Bien entendu, l'incrémentation doit alors être synchronisée avec celle mise en oeuvre dans le serveur 3.

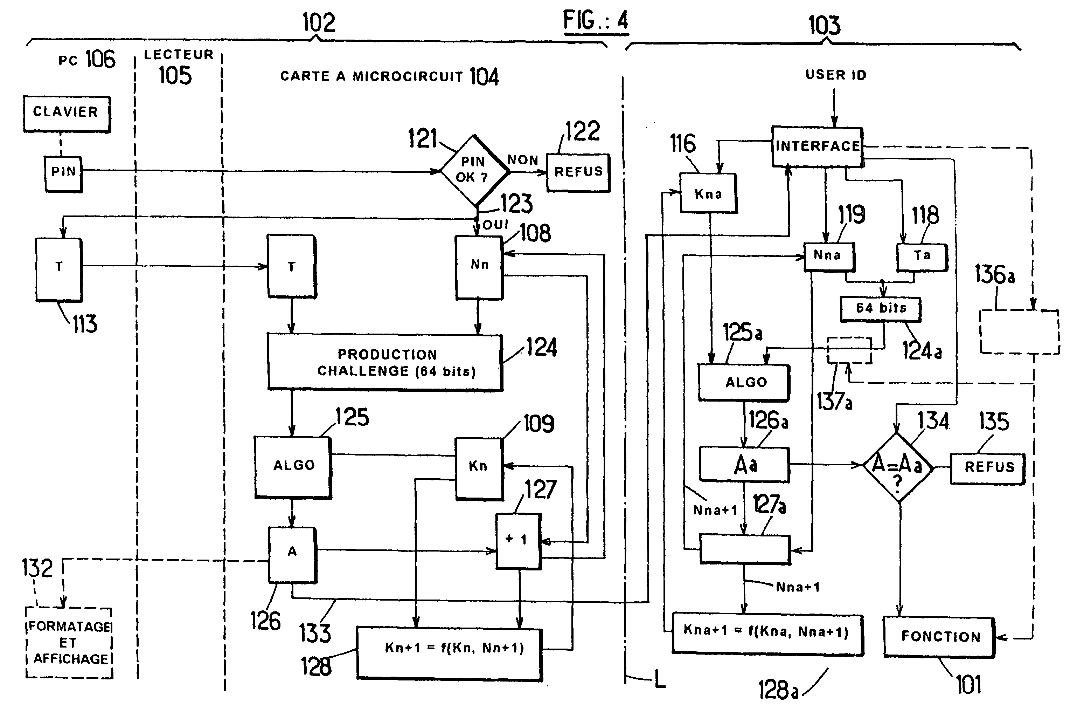

Un exemple des opérations pouvant être effectuées en 28 pour le calcul de cette nouvelle valeur est représenté à la figure 3. Ces opérations sont effectuées de concert aussi bien dans la carte à microcircuit 4 que dans le serveur 3. Tout d'abord, les valeurs Nn+1 et Kn sont soumises en 29 à une opération de combinaison logique, par exemple une combinaison OU-EXCLUSIF. La variable intermédiaire résultante Z est soumise à un chiffrement en 30 à l'aide d'un algorithme connu ou public qui peut être le même que celui utilisé en 25. Le chiffrement peut être effectué à l'aide d'une clé de chiffrement qui est de préférence la valeur de la variable dynamique actuelle Kn, bien qu'une autre clé secrète Q (bloc 31) puisse également être utilisée.

Le résultat de l'opération de chiffrement en 30 est la nouvelle valeur Kn+1 de la clé de chiffrement qui va être utilisée lors de la prochaine demande d'accès. Cette valeur est mémorisée dans le registre 9.

Après obtention du mot de passe A qui est affiché sur l'écran 11 du calculateur 6 en 32, l'utilisateur est invité à le communiquer au serveur 3. Il est à noter que ce mot de passe peut être le résultat complet de l'opération de chiffrement en 25 (d'une longueur de 64 bits) ou bien seulement une partie de ce résultat, par exemple un mot de 32 bits. Cette communication (symbolisée par le trait en pointillés 33) peut se faire par exemple en tapant le mot sur le clavier 10 du calculateur 6. Cette communication peut également être réalisée automatiquement, par exemple par modem, et dans ce cas il n'est pas nécessaire que le mot de passe A soit présenté à l'utilisateur en 32.

Lors de l'introduction dans le serveur 3 du numéro d'identification public (USER ID), le programme du microprocesseur 15 exécute, de concert avec la première unité 2 et à l'aide de variables dynamiques engendrées indépendamment par rapport à la première unité 2, des opérations de calcul identiques à celles exécutées dans celle-ci. Ces opérations ont donc été indiquées sur la figure 2 par les mêmes références numériques suivies de la lettre "a". En réponse à la demande d'accès, par exemple à la transmission du numéro d'identification au serveur 3, les variables Kna et Nna sont extraites des mémoires 16 et 19 du serveur 3. Les mémoires 16 et 19 stockent les variables Kna et Nna de chaque carte 4 à microcircuit avec lesquelles le serveur est appelé à coopérer.

En réponse à la demande d'accès, la variable T_{c} est également extraite du compteur 18. Si les calculateurs 6 qui sont utilisés avec les cartes à microcircuit 4 n'ont pas été tous initialisés à la même valeur T0, le calculateur 6 doit être identifié par le serveur 3, par exemple au moment où le numéro USER ID est transmis au serveur 3. En réponse à cette identification, le microprocesseur 15 lit dans une mémoire la valeur initiale T0 de la variable T pour ce calculateur et calcule à partir de T0 et de T_{c} une variable de temps Ta qui doit être égale à la variable de temps T dans le calculateur 6.

Par conséquent, le serveur 3 produit de son côté, et sans que les variables dynamiques produites dans la première unité 2 lui soient communiquées, un mot de passe Aa qui est comparé avec le mot de passe A transmis au serveur 3 par l'utilisateur. Si la carte à microcircuit 4 est authentique, les mots de passe A et Aa doivent être identiques ou du moins concorder selon des règles prédéterminées. Si le test en 34 aboutit à une réponse affirmative, la fonction 1 est libérée. Dans le cas contraire, l'accès sera refusé en 35.

Il est à noter qu'avec un système selon l'invention, des problèmes peuvent surgir lorsque l'une des variables dynamiques est le temps ou une fonction de celui-ci comme décrit ci-dessus, étant donné qu'une dérive des horloges utilisées à la fois dans les calculateurs 6 et dans le serveur 3 peut se produire. Une solution avantageuse à ce problème est décrite dans WO97/36263.

On constate donc que, selon le mode de réalisation décrit, le processus d'authentification de la première unité 2 conduisant à la libération de la fonction en 1 est réalisé à l'aide de trois variables dynamiques, dont l'une est la clé de chiffrement Kn (Kna) et dont les autres sont le nombre Nn (Nna) de demandes d'accès déjà effectuées et le temps T (Ta) (ou des nombres calculés suivant une fonction prédéterminée de ces variables).

La clé de chiffrement Kn (Kna) elle-même dérive d'une demande d'accès à l'autre et elle est dynamiquement variable en fonction de la valeur Nn (Nna) avec laquelle elle peut être combinée logiquement, puis chiffrée pour donner lieu à la clé de chiffrement Kn+1 (Kna+1 ) utilisée lors de la prochaine demande d'accès.

Suivant une variante de l'invention, on peut envisager un transfert de données de la première unité 2 au serveur 3 afin que les données puissent être traitées lors de l'accomplissement de la fonction 1, dans la mesure naturellement où l'autorisation a été donnée pour cela à la suite du test en 34.

L'utilisateur, en formulant sa demande d'accès, introduit en 36 les données dans la première unité 2 à l'aide de son clavier 10. Ces données sont combinées logiquement en 37 avec la valeur concaténée des deux variables Nn et T, le résultat étant utilisé comme paramètre d'entrée de la procédure de chiffrement effectuée en 25. En variante, les données peuvent également être combinées directement avec le résultat de l'opération de chiffrement en 25 ou bien les données peuvent constituer une autre clé pour l'algorithme en 25. L'aspect essentiel est que la sortie du bloc 25 soit une fonction des données à transférer.

Les données sont également transférées au serveur 3, par exemple au moyen du clavier 10 du calculateur 6 ou automatiquement par l'intermédiaire de la liaison 14.

Les données ainsi reçues en 36a dans le serveur 3 y sont traitées de la même façon que dans la première unité 2. Plus particulièrement, les données peuvent être combinées par une opération logique en 37a avec la valeur concaténée de Nna et Ta, le résultat étant utilisé comme paramètre d'entrée pour le processus de chiffrement en 25a. En variante, les données peuvent directement être combinées avec le résultat de l'opération de chiffrement en 25a ou bien les données peuvent constituer une autre, clé pour l'algorithme en 25a. Les données sont aussi communiquées en clair au dispositif chargé d'exécuter la fonction 1.

Ainsi, l'authenticité des données peut être vérifiée par comparaison des mots de passe A et Aa qui sont tous deux des fonctions de la valeur représentant les données. La mise en oeuvre de la fonction 1 recevra donc un refus s'il y a non concordance entre les données présentées des deux côtés.

Plusieurs autres modes de réalisation seront maintenant décrits, certains d'entre eux l'étant en faisant référence à des changements se produisant dans la première unité 2, mais on comprendra que ces mêmes changements s'appliquent également au serveur 3 car la première unité 2 et le serveur 3 doivent pouvoir engendrer des mots de passe identiques ou concordant A, Aa.

En variante, la fonction 28 (représentée aux figures 2 et 3) peut varier en fonction de T. De même l'algorithme 30 peut être changé à chaque nouvelle dérivation de Kn. De façon similaire, l'algorithme utilisé en 25 peut être changé à chaque fois qu'un mot de passe est engendré. Par exemple, les modules 25, 25a et 30, 30a peuvent stocker plusieurs algorithmes utilisés distinctement au cours des différentes opérations de calcul des mots de passe. Des changements synchronisés doivent alors être réalisés dans le serveur 3 en ce qui concerne la fonction 28a, l'algorithme 30a et l'algorithme 25a.

De plus, la fonction 29 (figure 3) peut être différente d'une fonction OU-EXCLUSIF, telle qu'une opération ET ou toute autre opération logique. De plus, la fonction 29 n'est pas indispensable, Nn+1 pouvant directement être utilisé par l'algorithme 30 de façon à être chiffré par Kn et Q. De même, en variante, Q peut être soumis avec Nn+1 à une opération OU-EXCLUSIF en 29, Kn et Q étant utilisés comme clé de chiffrement pour le chiffrement de la sortie produite par l'opération logique en 29.

Une autre modification consiste à prévoir une porte ET entre les modules 26 et 27 de la figure 2, la sortie du module 26 constituant l'une des entrées de cette porte ET, l'autre entrée en étant formée par un signal provenant du serveur 3 et qui n'est engendré que si le module 26a engendre une sortie. De cette manière, le registre 8 dans la carte 4 et le registre 19 dans le serveur 3 seront incrémentés de façon synchrone. Il n'y aura alors aucune perte de synchronisation des valeurs Nn et Nna. Cependant, dans certaines applications de la présente invention, une telle communication en retour du serveur vers la carte peut ne pas être souhaitable.

Une autre variante consiste à stocker les données en 36 dans la mémoire de la carte à microcircuit 4. Par exemple, si la carte 4 est une carte bancaire, les données en 36 pourraient être la situation d'un compte bancaire, un numéro de compte, etc.

La dérivation de Kn selon les fonctions 28 et 28a peut également être exécutée comme suit. Kn peut être dérivé deux fois pour chaque calcul du mot de passe. On peut le faire par exemple avant et après le calcul du mot de passe. Kn peut également être redérivé en parallèle avec le calcul du mot de passe. En d'autres termes, Kn peut être redérivé pendant le calcul d'un mot de passe, les sorties du module 25 et du module 25a étant alors directement utilisées comme entrées des modules 27 et 27a respectivement.

En variante, Nn et T peuvent être introduits directement dans le module de chiffrement 25. Les données peuvent également être combinées logiquement directement avec Nn et T, ou encore les données peuvent être scindées en deux parties combinées respectivement avec Nn ou T.

La figure 4 montre une variante du premier mode de réalisation qui simplifie le logiciel implanté dans l'ordinateur personnel PC et limite les échanges d'informations entre l'ordinateur personnel PC et la carte à microcircuit. Sur la figure 4, les mêmes références que sur la figure 2, mais augmentées du nombre 100, ont été utilisées pour désigner des éléments correspondants. Ce qui manque dans la carte à microcircuit 104 est le compteur d'horloge 113 stockant la variable de temps T. Toutes les autres fonctions mises en oeuvre pour la génération du mot de passe sont implantées dans la carte à microcircuit 104.

Une fois que l'utitisateur a été identifié en 121 par la première unité 102 grâce à l'introduction du numéro d'identification personnel ou PIN dans le clavier, l'ordinateur personnel ou PC 106 envoie la variable T stockée dans le compteur 113 à la carte à microcircuit 104. En 124, Nn et la variable T sont concaténés ou traités d'une autre manière, comme décrit ci-dessus à propos de la figure 2, pour générer dans la carte 104 un paramètre d'entrée ou challenge de, par exemple, 64 bits. Ce challenge est chiffré par l'algorithme ALGO en 125 en utilisant la clé de chiffrement Kn stockée dans le registre 109.

Le chiffrement effectué en 125 génère en 126 le mot de passe A qui est formaté et affiché sur l'écran du PC 106 en 132. Ce mot de passe A est communiqué au serveur ou seconde unité 103 comme décrit en regard de la figure 2. Bien entendu, si l'ordinateur personnel 106 communique directement le mot de passe A à la seconde unité 103, par exemple par modem, il n'est pas nécessaire, d'afficher le mot de passe A pour l'utilisateur.

Le chiffrement effectué en 125 provoque également l'incrémentation en 127 de la valeur Nn, et la nouvelle valeur Nn+1 est stockée dans le registre 108 de la carte à microcircuit 104. L'incrémentation peut être une incrémentation d'une unité ou un autre type d'incrémentation comme décrit ci-dessus. Le nombre incrémenté Nn+1 est également soumis en 128 à une opération de calcul pour calculer une nouvelle valeur Kn+1 de la troisième variable dynamique ou clé de chiffrement secrète. Cette opération de calcul a également été décrite ci-dessus.

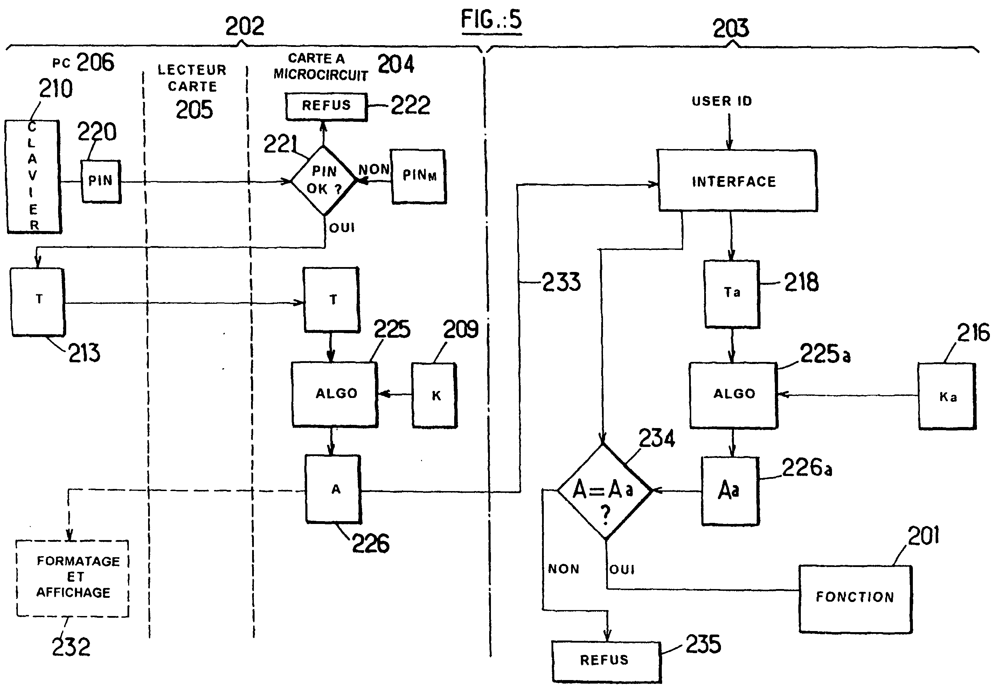

Une version simplifiée du premier mode de réalisation, représentée à la figure 5, peut consister à éliminer le compteur d'événements et la dérivation de clé, c'est-à-dire les variables dynamiques autres que T, la clé Kn étant statique. Sur la figure 5, les mêmes références que sur la figure 2, mais augmentées du nombre 200, ont été utilisées pour désigner les éléments correspondants. En dehors de la suppression du compteur d'événements et de la dérivation de clé, les différentes opérations représentées à la figure 5 sont semblables à celles des figures 2 et 4 et ne seront pas décrites en détail.

Le lecteur 5 de carte à microcircuit représenté dans le premier mode de réalisation des figures 1 à 5 est un lecteur passif de carte à microcircuit, c'est-à-dire qu'il transmet simplement les données entre la carte 4 à microcircuit et l'ordinateur personnel 6. En variante, le lecteur 5 de carte à microcircuit peut être un lecteur "intelligent" ou actif de carte à microcircuit et peut être portable. Le second mode de réalisation de l'invention, visant l'utilisation d'un tel lecteur "intelligent" de carte à microcircuit, est représenté à la figure 6.

Comme représenté à la figure 6, dans la première unité 302, le lecteur "intelligent" 305 de carte à microcircuit lit la carte à microcircuit 304 du premier mode de réalisation et est adapté pour être utilisé avec une seconde unité 303 qui peut être la même que la seconde unité 3, 103 ou 203. Le lecteur 305 de carte à microcircuit comprend un davier 310, un écran d'affichage 311, un registre 313 et une horloge 312 correspondant au clavier 10, à l'écran d'affichage 11, au registre 13 et à l'horloge 12 et peut également comporter sa propre source d'énergie électrique, telle qu'une batterie 350. Un tel lecteur de carte à microcircuit peut mettre en oeuvre les fonctions décrites à la figure 2 pour le PC 306, ou aux figures 4 et 5 pour les PC 106 et 206 respectivement.

Comme indiqué ci-dessus, le lecteur 305 de carte à microcircuit peut être configuré pour fournir T, et la carte à microcircuit 304 peut être configurée pour mettre en oeuvre les autres opérations de la première unité 302 comme décrit à propos des figures 4 et 5.

En variante, le lecteur 305 de carte à microcircuit peut être configuré pour mettre en oeuvre les mêmes opérations que l'ordinateur personnel 6 de la figure 2 et la carte à microcircuit 304 peut être configurée pour mettre en oeuvre les autres opérations de la première unité 302. En variante, comme décrit ci-dessus, la variable de temps T peut être fournie par un ordinateur personnel PC 306 au lecteur 305 de carte à microcircuit, supprimant ainsi la nécessité de l'horloge 312 dans le lecteur 305.

Une première unité telle que 2, 102, 202 ou 302 peut être implantée dans n'importe quel dispositif possédé par l'utilisateur tel qu'un assistant numérique personnel (PDA), un téléphone cellulaire ou autre type de récepteur téléphonique, pour autant qu'un tel dispositif est configuré du point de vue matériel et/ou logiciel pour lire une carte à microcircuit et mettre en oeuvre les fonctions décrites à propos des figures 2, 4 ou 5.

La présente invention se distingue de la technique antérieure du fait que la variable dynamique T représentant le temps actuel n'est pas engendrée là où l'algorithme et les clés sont stockés et mis en oeuvre. La technique antérieure décrit des modes de réalisation dans lesquels la génération d'un signal d'horloge est réalisée là où l'algorithme et les clés sont stockés. La présente invention est basée sur le fait qu'une variable fonction du temps est engendrée en dehors de la carte à microcircuit par un ordinateur personnel ou un lecteur "intelligent" de carte et transmise à la carte à microcircuit pour générer un mot de passe utilisant une clé stockée dans la carte à microcircuit. Cet agencement est avantageux car, sans qu'aucune source d'énergie permanente soit requise dans la carte, il combine les avantages des mécanismes de sécurité matériels et logiciels disponibles dans une carte à microcircuit avec ceux offerts par des mots de passe dynamiques fonction du temps qui sont plus sûrs que des mots de passe statiques. Cet agencement est également avantageux car il permet d'utiliser des dispositifs électroniques répandus très largement tels que des ordinateurs personnels, des assistants numériques personnels, des téléphones cellulaires, etc..., qui ne sont généralement pas sécurisés, pour fournir, en combinaison avec une carte à microcircuit, un système d'authentification hautement sécurisé délivrant des mots de passe dynamiques fonction du temps.

Il va de soi pour les spécialistes de la technique que des variantes décrites séparément peuvent être combinées.

## Revendications

1. Système d'authentification pour contrôler l'accès d'au moins un utilisateur à une fonction, ledit système comprenant au moins une première unité (2 ; 102 ; 202 ; 302) personnalisée pour ledit utilisateur et au moins une seconde unité de vérification (3 ; 103 ; 203 ; 303) commandant l'accès à ladite fonction,
• ladite première unité (2 ; 102 ; 202 ; 302) comprenant :
- des premiers moyens générateurs (13 ; 113 ; 213 ; 313) pour engendrer au moins une variable dynamique (T) ;
- des premiers moyens de calcul (24, 25 ; 124, 125 ; 225) pour engendrer un premier mot de passe (A) en fonction de ladite variable dynamique (T) ; et
- des moyens (10 ; 33) pour transmettre ledit premier mot de passe à ladite seconde unité ;
• ladite seconde unité (3 ; 103 ; 203 ; 303) comprenant :
- des seconds moyens générateurs (18 ; 118 ; 218) pour, en réponse à une demande d'accès ou d'authentification faite à l'aide de ladite première unité, engendrer au moins une variable dynamique (Ta) assignée à ladite première unité ;
- des seconds moyens de calcul (24a, 25a; 124a, 125a; 225a) pour engendrer un second mot de passe (Aa) en fonction de ladite variable dynamique (Ta) engendrée dans ladite seconde unité ;
- des moyens de comparaison (34 ; 134 ; 234) pour comparer lesdits premier et second mots de passe (A, Aa) respectivement ; et
- des moyens (34 ; 134 ; 234) pour, s'il y a une cohérence prédéterminée entres lesdits mots de passe (A, Aa), délivrer une autorisation d'accès à ladite fonction (1) ;
charactérisé en ce que
• lesdits premiers et seconds moyens générateurs prévus respectivement dans lesdites première et seconde unité engendrent ladite première variable dynamique (T) de ladite première unité et ladite variable dynamique (Ta) de ladite seconde unité de concert, mais de façon indépendante ;
- ladite première unité comprend une carte à microcircuit (4 ; 104 ; 204 ; 304) et un lecteur de carte (5, 105 ; 205 ; 305),
- lesdits moyens (12, 13 ; 113 ; 213 ; 312, 313) pour produire ladite variable dynamique (T) de ladite première unité (2; 102 ; 302 ; 302) sont disposés à l'extérieur de ladite carte et ladite variable dynamique (T) pour ladite première unité est transmise par ledit lecteur de carte à ladite carte, et
- lesdits premiers moyens de calcul comprennent des moyens de traitement (25 ; 225) dans ladite carte (4 ; 104 ; 204 ; 304) pour le traitement de variable dynamique (T).

2. Système selon la revendication 1, **caractérisé en ce que** ladite variable dynamique pour chacune desdites première et deuxième unités comprend une première variable dynamique (T, Ta) variant en fonction du temps.

3. Système selon la revendication 2, **caractérisé en ce que** :
- lesdits premiers moyens de calcul (24, 25 ; 124, 125 ; 225) produisent ledit premier mot de passe (A) à l'aide d'au moins un premier algorithme de chiffrement utilisant des paramètres d'entrée fonction de ladite première variable dynamique (T) produite dans ladite première unité ;
- lesdits seconds moyens de calcul (24a, 25a ; 124a, 125a ; 225a) produisent ledit second mot de passe (Aa) à l'aide d'au moins un second algorithme de chiffrement utilisant des paramètres d'entrée fonction de ladite variable dynamique (Ta) produite dans ladite seconde unité, et
- l'un desdits paramètres d'entrée pour générer lesdits premier (A) et second (Aa) mots de passe est une clé de chiffrement (Kn, Kna ; K, Ka) utilisée dans lesdits premier et second algorithmes.

4. Système selon la revendication 3, **caractérisé en ce que** lesdites première (2 ; 102 ; 302) et seconde (3, 103 ; 203) unités respectivement comprennent des troisièmes (8 ; 108) et quatrièmes (19 ; 119) moyens générateurs pour produire au moins une seconde variable dynamique (Nn, Nna) conformément à une fonction impliquant un nombre de demandes d'accès effectuées par ladite première unité avant une demande d'accès en cours, lesdits premiers (24, 25 ; 124, 125) et seconds (24a, 25a ; 124a, 125a) moyens de calcul produisant respectivement lesdits premier (A) et second (Aa) mots de passe en fonction desdites première (T, Ta) et seconde (Nn, Nna) variables dynamiques.

5. Système selon la revendication 4, **caractérisé en ce que** lesdites première (2 ; 102 ; 302) et seconde (3 ; 103 ; 303) unités comprennent des cinquièmes (28 ; 128) et sixièmes (28a ; 128a) moyens générateurs pour produire au moins une troisième variable dynamique (Kn, Kna) suivant une fonction impliquant l'une au moins desdites première et seconde variables dynamiques (T, Ta, Nn, Nna), lesdits premiers (24, 25 ; 124 ; 125) et seconds (24a, 25a ; 124a, 125a) moyens de calcul produisant respectivement lesdits premier (A) et second (Aa) mots de passe en fonction desdites première (T, Ta), seconde (Nn, Nna) et troisième (Kn, Kna) variables dynamiques.

6. Système selon la revendication 5, **caractérisé en ce que** lesdites première (2 ; 102 ; 302) et seconde (3 ; 103 ; 303) unités comprennent des troisièmes (24 ; 124) et quatrièmes (24a ; 124a) moyens de calcul respectivement pour produire une variable dynamique intermédiaire par combinaison logique desdites première (T, Ta) et seconde (Nn, Nna) variables dynamiques, lesdits premiers (25 ; 125) et seconds (25a ; 125a) moyens de calcul produisant lesdits premier (A) et second (Aa) mots de passe en fonction de ladite variable dynamique intermédiaire et de ladite troisième variable dynamique (Kn, Kna) respectivement.

7. Système selon la revendication 6, **caractérisé en ce que** lesdits troisièmes moyens de calcul (124) sont disposés dans ladite carte (104).

8. Système selon la revendication 6, **caractérisé en ce que** lesdits troisièmes moyens de calcul (24) sont disposés en dehors de ladite carte (4).

9. Système selon l'une quelconque des revendications 5 à 8, **caractérisé en ce que** ladite seconde variable dynamique (Nn, Nna) est ledit nombre de demandes d'accès effectuées par ladite première unité (2 ; 102 ; 302) préalablement à une demande d'accès en cours et ladite troisième variable dynamique (Kn, Kna) est une fonction de ladite seconde variable dynamique (Nn, Nna) et de la valeur précédente de ladite troisième variable dynamique.

10. Système selon l'une quelconque des revendications 5 à 9, **caractérisé en ce que** ladite troisième variable dynamique (Kn, Kna) est ladite clé de chiffrement.

11. Système selon la revendication 2, **caractérisé en ce que** :
- lesdites première (2 ; 102; 302) et seconde (3 ; 103 ; 303) unités comprennent des troisièmes (28; 128) et quatrièmes (28a ; 128a) moyens générateurs respectivement pour produire au moins une seconde variable dynamique de concert, mais de façon indépendante ;
- lesdits premiers moyens de calcul (24, 25 ; 124, 125 ; 225) produisent ledit premier mot de passe (A) en fonction desdites première (T) et deuxième (Kn) variables dynamiques engendrées dans ladite première unité, et
- lesdits seconds moyens de calcul (24a, 25a ; 124a, 125a ; 225a) produisent ledit second mot de passe (Aa) en fonction desdites première (Ta) et seconde (Kna) variables dynamiques engendrées dans ladite seconde unité.

12. Système selon la revendication 11, **caractérisé en ce que** :
- lesdits premiers moyens de calcul (24, 25 ; 124, 125) produisent ledit premier mot de passe (A) en fonction d'au moins un premier algorithme (ALGO) utilisant une clé de chiffrement (Kn) pour chiffrer un paramètre d'entrée fonction de ladite première variable dynamique (T) engendrée dans ladite première unité,
- lesdits seconds moyens de calcul (24a, 25a ; 124a, 125a) produisent ledit second mot de passe (Aa) en fonction d'au moins un second algorithme de chiffrement utilisant une clé de chiffrement (Kna) pour chiffrer un paramètre d'entrée fonction de ladite première variable dynamique (Ta) produite dans ladite seconde unité, et
- ladite clé de chiffrement (Kn, Kna) utilisée dans lesdits premier et second algorithmes de chiffrement respectivement est ladite seconde variable dynamique produite dans lesdites première et seconde unités respectivement.

13. Système selon l'une quelconque des revendications 2 à 12, **caractérisé en ce que** lesdits moyens (312, 313) pour produire ladite première variable dynamique (T) sont disposés dans ledit lecteur de carte (305).

14. Système selon l'une quelconque des revendications 2 à 12, **caractérisé en ce que** ladite première unité (2 ; 102 ; 202) comprend un ordinateur personnel (6 ; 106 ; 206) comprenant lesdits moyens (12, 13 ; 113 ; 213) pour générer ladite première variable dynamique (T) et des moyens de connexion audit lecteur de carte (5 ; 105 ; 205).

15. Système selon l'une quelconque des revendications 13 ou 14, **caractérisé en ce que** lesdits moyens (12, 13 ; 113 ; 213 ; 312, 313) pour produire ladite première variable dynamique (T) comprennent une horloge (12; 312) et un compteur (13, 113 ; 213 ; 313).

## Patentansprüche

1. Zugangsberechtigungssystem zum Kontrollieren des Zugangs von mindestens einem Anwender zu einer Funktion, wobei das System mindestens eine erste Einheit (2; 102; 202; 302), die auf diesen Anwender ausgerichtet ist und mindestens eine zweite Einheit (3; 103; 203; 303) zum Überprüfen aufweist, die den Zugang zu dieser Funktion steuert,
• wobei diese erste Einheit (2; 102; 202; 302) Folgendes umfasst:
- erste erzeugende Mittel (13; 113; 213; 313) zum Erzeugen von mindestens einer dynamischen Veränderlichen (T);
- erste Berechnungsmittel (24, 25; 124, 125; 225) zum Erzeugen eines ersten Passworts (A) in Abhängigkeit von der dynamischen Veränderlichen (T); und
- Mittel (10; 33) zum Übertragen des ersten Passworts an die zweite Einheit;
• wobei diese zweite Einheit (3; 103; 203; 303) umfasst:
- zweite erzeugende Mittel (18; 118; 218) zum Erzeugen von mindestens einer dynamischen Veränderlichen (Ta), die der ersten Einheit zugeordnet ist, als Antwort auf eine Zugriffs- oder Zugangsberechtigungsanforderung, die mit Hilfe der ersten Einheit erfolgt ist;
- zweite Berechnungsmittel (24a, 25a; 124a, 125a; 225a) zum Erzeugen eines zweiten Passworts (Aa) in Abhängigkeit von der dynamischen Veränderlichen (Ta), die in der zweiten Einheit erzeugt ist;
- Vergleichsmittel (34; 134; 234) zum Vergleichen des ersten beziehungsweise zweiten Passworts (A, Aa); und
- Mittel (34; 134; 234) zum Erteilen einer Zugriffsberechtigung auf die Funktion (1), wenn eine vorgegebene Übereinstimmung zwischen den Passwörtern (A, Aa) besteht;
**dadurch gekennzeichnet, dass**
- die ersten beziehungsweise zweiten erzeugenden Mittel, die in der ersten beziehungsweise zweiten Einheit vorgesehen sind, die erste dynamische Veränderliche (T) der ersten Einheit und die dynamische Veränderliche (Ta) der zweiten Einheit in Übereinstimmung erzeugen, jedoch auf unabhängige Art und Weise;
- die erste Einheit eine Chipkarte (4; 104; 204; 304) und einen Kartenleser (5, 105; 205; 305) umfasst,
- die Mittel (12, 13; 113; 213; 312, 313) zum Erstellen der dynamischen Veränderlichen (T) der ersten Einheit (2; 102; 302; 302) außerhalb der Karte angeordnet sind und die dynamische Veränderliche (T) für die erste Einheit über den Kartenleser an die Karte übermittelt ist, und
- die erste Berechnungsmittel Verarbeitungsmittel (25; 225) in der Karte (4; 104; 204; 304) aufweisen zum Verarbeiten der dynamischen Veränderlichen (T).

2. System nach Anspruch 1, **dadurch gekennzeichnet, dass** die dynamische Veränderliche bei jeder der ersten und zweiten Einheiten eine erste dynamische Veränderliche (T, Ta) aufweist, die in Abhängigkeit von der Zeit schwankt.

3. System nach Anspruch 2, **dadurch gekennzeichnet, dass**:
- die ersten Berechnungsmittel (24, 25; 124, 125; 225) das erste Passwort (A) erzeugen, mit Hilfe von mindestens einem ersten Verschlüsselungsalgorithmus, wobei Eingangsgrößen verwendet sind, die von der ersten dynamischen Veränderlichen (T) abhängig sind, die in der ersten Einheit erstellt ist;
- die zweiten Berechnungsmittel (24a, 25a; 124a, 125a; 225a) das zweite Passwort (Aa) erzeugen, mit Hilfe von mindestens einem zweiten Verschlüsselungsalgorithmus, wobei Eingangsgrößen verwendet sind, die von der dynamischen Veränderlichen (Ta)abhängig, die in der zweiten Einheit erstellt ist, und
- eine der Eingangsgrößen zum Erzeugen des ersten (A) und zweiten (Aa) Passworts ein Schlüssel (Kn, Kna; K, Ka) ist, der bei dem ersten und zweiten Algorithmus verwendet ist.

4. System nach Anspruch 3, **dadurch gekennzeichnet, dass** die erste (2; 102; 302) beziehungsweise zweite (3, 103; 203) Einheit dritte (8; 108) und vierte (19; 119) erzeugende Mittel zum Erstellen von mindestens einer zweiten dynamischen Veränderlichen (Nn, Nna) gemäß einer Funktion umfassen, die eine Anzahl von Zugriffsanforderungen enthält, die durch die erste Einheit vor einer laufenden Zugriffsanforderung erfolgt sind, wobei die ersten (24, 25; 124, 125) und zweiten (24a, 25a; 124a, 125a) Berechnungsmittel das erste (A) beziehungsweise zweite (Aa) Passwort in Abhängigkeit von der ersten (T, Ta) und zweiten (Nn, Nna) dynamischen Veränderlichen erstellen.

5. System nach Anspruch 4, **dadurch gekennzeichnet, dass** die erste (2; 102; 302) und zweite (3; 103; 303) Einheit fünfte (28; 128) und sechste (28a; 128a) erzeugende Mittel zum Erstellen von mindestens einer dritten dynamischen Veränderlichen (Kn, Kna) gemäß einer Funktion umfassen, die mindestens eine der ersten und zweiten dynamischen Veränderlichen (T, Ta, Nn, Nna) verwendet, wobei die ersten (24, 25; 124; 125) und zweiten (24a, 25a; 124a, 125a) Berechnungsmittel das erste (A) beziehungsweise zweite (Aa) Passwort in Abhängigkeit von der ersten (T, Ta), zweiten (Nn, Nna) und dritten (Kn, Kna) dynamischen Veränderlichen erstellen.

6. System nach Anspruch 5, **dadurch gekennzeichnet, dass** die erste (2; 102; 302) und zweite (3; 103; 303) Einheit dritte (24; 124) beziehungsweise vierte (24a; 124a) Berechnungsmittel zum Erstellen einer dynamischen Zwischenveränderlichen durch logisches Verknüpfen der ersten (T, Ta) und zweiten (Nn, Nna) dynamischen Veränderlichen umfassen, wobei die ersten (25; 125) und zweiten (25a; 125a) Berechnungsmittel das erste (A) und zweite (Aa) Passwort erstellen, in Abhängigkeit von der dynamischen Zwischenveränderlichen beziehungsweise der dritten dynamischen Veränderlichen (Kn, Kna).

7. System nach Anspruch 6, **dadurch gekennzeichnet, dass** die dritten Berechnungsmittel (124) in der Karte (104) angeordnet sind.

8. System nach Anspruch 6, **dadurch gekennzeichnet, dass** die dritten Berechnungsmittel (24) außerhalb der Karte (4) angeordnet sind.

9. System nach einem der Ansprüche 5 bis 8, **dadurch gekennzeichnet, dass** die zweite dynamische Veränderliche (Nn, Nna) die Anzahl der Zugriffsanforderungen ist, die durch die erste Einheit (2; 102; 302) vor einer laufenden Zugriffsanforderung erfolgt ist, und die dritte dynamische Veränderliche (Kn, Kna) eine Funktion der zweiten dynamischen Veränderlichen (Nn, Nna) und des vorhergehenden Werts der dritten dynamischen Veränderlichen ist.

10. System nach einem der Ansprüche 5 bis 9, **dadurch gekennzeichnet, dass** die dritte dynamische Veränderliche (Kn, Kna) der Schlüssel ist.

11. System nach Anspruch 2, **dadurch gekennzeichnet, dass**:
- die erste (2; 102; 302) und zweite (3; 103; 303) Einheit dritte (28; 128) beziehungsweise vierte (28a; 128a) erzeugende Mittel umfassen, die mindestens eine zweite dynamische Veränderlichen in Übereinstimmung erstellen, jedoch auf unabhängige Weise;
- die ersten Berechnungsmittel (24, 25; 124, 125; 225) das erste Passwort (A) in Abhängigkeit von der ersten (T) und zweiten (Kn) dynamischen Veränderlichen erstellen, die in der ersten Einheit erzeugt sind, und
- die zweiten Berechnungsmittel (24a, 25a; 124a, 125a; 225a) das zweite Passwort (Aa) in Abhängigkeit von der ersten (Ta) und zweiten (Kna) dynamischen Veränderlichen erstellen, die in der zweiten Einheit erzeugt sind.

12. System nach Anspruch 11, **dadurch gekennzeichnet, dass**:
- die ersten Berechnungsmittel (24, 25; 124, 125) das erste Passwort (A) in Abhängigkeit von mindestens einem ersten Algorithmus (ALGO) erstellen, wobei ein Schlüssel (Kn) zum Verschlüsseln einer Eingangsgröße verwendet ist, in Abhängigkeit von der ersten dynamischen Veränderlichen (T), die in der ersten Einheit erzeugt ist,
- die zweiten Berechnungsmittel (24a, 25a; 124a, 125a) das zweite Passwort (Aa) in Abhängigkeit von mindestens einem zweiten Verschlüsselungsalgorithmus erstellen, wobei ein Schlüssel (Kna) zum Verschlüsseln einer Eingangsgröße verwendet ist, in Abhängigkeit von der ersten dynamischen Veränderlichen (Ta), die in der zweiten Einheit erstellt ist, und
- der Schlüssel (Kn, Kna), der bei dem ersten beziehungsweise zweiten Verschlüsselungsalgorithmus verwendet ist, die zweite dynamische Veränderliche ist, die in der ersten beziehungsweise zweiten Einheit erstellt ist.

13. System nach einem der Ansprüche 2 bis 12, **dadurch gekennzeichnet, dass** die Mittel (312, 313) zum Erstellen der ersten dynamischen Veränderlichen (T) in dem Kartenleser (305) angeordnet sind.

14. System nach einem der Ansprüche 2 bis 12, **dadurch gekennzeichnet, dass** die erste Einheit {2; 102; 202) einen Personalcomputer (6; 106; 206) enthält, der die Mittel (12, 13; 113; 213) zum Erstellen der ersten dynamischen Veränderlichen (T) und Mittel zum Verbinden mit dem Kartenleser (5; 105; 205) umfasst.

15. System nach einem der Ansprüche 13 oder 14, **dadurch gekennzeichnet, dass** die Mittel (12, 13; 113; 213; 312, 313) zum Erstellen der ersten dynamischen Veränderlichen (T) eine Uhr (12; 312) und einen Zähler (13, 113; 213; 313) umfassen.

## Claims

1. An authentication system for control of access of at least one user to a function, said system including at least one first unit (2 ; 102 ; 202 ; 302) personalized for said user and at least one second verification unit (3 ; 103 ; 203 ; 303) controlling access to said function,
• said first unit (2 ; 102 ; 202 ; 302) comprising:
- first generator means (13 ; 113 ; 213 ; 313) for producing at least one dynamic variable (T);
- first calculation means (24, 25 ; 124, 125 ; 225) for producing a first password (A) as a function of said at least one dynamic variable (T); and
- means (10 ; 33) for transmitting said first password to said second unit;
• said second unit (3 ; 103; 203 ; 303) comprising:
- second generator means (18 ; 118 ; 218) for, in response to an access or authentication request made by way of said at least one first unit, producing at least one dynamic variable (Ta) assigned to said at least one first unit;
- second calculation means (24a, 25a ; 124a, 125a ; 225a) for producing a second password (Aa) as a function of said at least one dynamic variable (Ta) produced in said second unit;
- comparator means (34 ; 134 ; 234) for comparing said first and second passwords (A, Aa) respectively; and
- means (34 ; 134 ; 234) for delivering an authorization of access to said function (1) if there is a predetermined consistency between said passwords (A, Aa);
**characterized in that**
- said first and second generator means provided respectively in said first and second units produce said at least one dynamic variable (T) of said first unit and said at least one dynamic variable (Ta) of said second unit in concert, but independently;
- said first unit further comprises a chip card (4 ; 104 ; 204 ; 304) and a card reader (5 ; 105 ; 205 ; 305), and
- said means (12, 13 ; 113 ; 213 ; 312, 313) for producing said at least one dynamic variable (T) of said first unit (2 ; 102 ; 202 ; 302) is disposed outside the card and said at least one dynamic variable (T) for said first unit is communicated by said card reader to said card, and
- said first calculation means comprises processing means (25 ; 225) in said card (4 ; 104 ; 204 ; 304) for processing of dynamic variable (T).

2. The system as claimed in claim 1, **characterized in that** said at least one dynamic variable for each of the first unit and the second unit comprises a first dynamic variable (T, Ta) varying as a function of time.

3. The system as claimed in claim 2, **characterized in that**:
- said first calculation means (24, 25; 124, 125; 225) produces said first password (A) in accordance with at least one first encryption algorithm using input parameters dependent on said first dynamic variable (T) produced in said first unit,
- said second calculation means (24a, 25a ; 124a, 125a ; 225a) produces said second password (Aa) by way of at least one second encryption algorithm using input parameters dependent on said first dynamic variable (Ta) produced in said second unit, and
- one of said input parameters used for producing said first (A) and second (Aa) passwords is an encryption key (Kn, Kna ; K, Ka) used in said first and second algorithms.

4. The system as claimed in claim 3, **characterized in that** said first (2 ; 102 ; 302) and second (3 ; 103 ; 203) units respectively comprise third (8 ; 108) and fourth (19 ; 119) generating means for producing at least a second dynamic variable (Nn, Nna) according to a function involving a number of access requests made by the first unit prior to an access request in progress, said first (24, 25 ; 124, 125) and second (24a, 25a ; 124a, 125a) calculation means producing respectively said first (A) and second (Aa) passwords as a function of said first (T, Ta) and second (Nn, Nna) dynamic variables.

5. The system as claimed in claim 4, **characterized in that** said first (2 ; 102 ; 302) and second (3 ; 103 ; 303) units comprise fifth (28 ; 128) and sixth (28a ; 128a) generating means for producing at least a third dynamic variable (Kn, Kna) according to a function involving at least one of said first and second dynamic variables (T, Ta, Nn, Nna), said first (24, 25 ; 124, 125) and second (24a, 25a ; 124a, 125a) calculation means producing respectively said first (A) and second (Aa) passwords as a function of said first (T, Ta), second (Nn, Nna) and third (Kn, Kna) dynamic variables.

6. The system as claimed in claim 5, **characterized in that** said first (2; 102 ; 302) and second (3 ; 103 ; 303) units comprise third (24 ; 124) and fourth (24a ; 124a) calculation means respectively for producing an intermediate dynamic variable by logical combination of said first (T, Ta) and second (Nn, Nna) dynamic variables, said first (25 ; 125) and second (25a ; 125a) calculation means producing said first (A) and second (Aa) passwords as a function of said intermediate dynamic variable and of said third dynamic variable (Kn, Kna) respectively.

7. The system as claimed in claim 6, **characterized in that** said third calculation means (124) are disposed in said card (104).

8. The system as claimed in claim 6, **characterized in that** said third calculation means (24) are disposed outside said card (4).

9. The system as claimed in any of claims 5 to 8, **characterized in that** said second dynamic variable (Nn, Nna) is said number of access requests made by the first unit (2 ; 102 ; 302) prior to an access request in progress and said third dynamic variable (Kn, Kna) is a function of said second dynamic variable (Nn, Nna) and of the preceding value of said third dynamic variable.

10. The system as claimed in any of claims 5 to 9, **characterized in that** said third dynamic variable (Kn, Kna) is said encryption key.

11. The system as claimed in claim 2, **characterized in that**
- said first (2; 102; 302) and second (3; 103; 303) units comprise third (28; 128) and fourth (28a; 128a) generating means respectively for producing at least a second dynamic variable in concert, but independently,
- said first calculation means (24, 25; 124, 125; 225) produces said first password (A) as a function of said first (T) and second (Kn) dynamic variables produced in said first unit, and
- said second calculation means (24a, 25a ; 124a, 125a ; 225a) produces said second password (Aa) as a function of said first (Ta) and second (Ta) dynamic variables produced in said second unit.

12. The system as claimed in claim 11, **characterized in that**
- said first calculation means (24, 25 ; 124, 125) produces said first password (A) in accordance with at least one first encryption algorithm (ALGO) using an encryption key (Kn) for encrypting an input parameter dependent on said first dynamic variable (T) produced in said first unit,
- said second calculation means (24a, 25a ; 124a, 125a) produces said second password (Aa) in accordance with at least one second encryption algorithm using an encryption key (Kna) for encrypting an input parameter dependent on said first dynamic variable (Ta) produced in said second unit, and
- said encryption key (Kn, Kna) used in said first and second encryption algorithms respectively is said second dynamic variable produced in said first and second units respectively.

13. The system as claimed in any of claims 2 to 12, **characterized in that** said means (312, 313) for producing said at least one dynamic variable (T) is disposed in said car reader (305).

14. The system as claimed in any of claims 2 to 12, **characterized in that** said first unit (2 ; 102 ; 202) comprises a personal computer (6 ; 106 ; 206) including said means (12, 13 ; 113 ; 213) for producing said at least one dynamic variable (T) and means for connecting to said card reader (5 ; 105 ; 205).

15. The system as claimed in claim 13 or 14, **characterized in that** said means (12, 13 ; 113 ; 213 ; 312, 313) for producing said at least one dynamic variable (T) includes a clock (12 ; 312) and a counter (13, 113 ; 213; 313).
